Europäisches Patentamt

European Patent Office

Office européen des brevets

(19)

(11) **EP 1 283 820 B1**

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(21) Anmeldenummer: **01933940.7**

(22) Anmeldetag: **07.05.2001**

(51) Int Cl.[7]: **C04B 38/00**

(86) Internationale Anmeldenummer:
**PCT/EP01/05151**

(87) Internationale Veröffentlichungsnummer:
**WO 01/085644 (15.11.2001 Gazette 2001/46)**

(54) **KERAMISCHES MATERIAL MIT HOHER PORÖSITÄT IN GEKÖRNTER FORM**

GRANULAR CERAMIC MATERIAL WITH HIGH POROSITY

MATERIAU CERAMIQUE GRANULEUX A POROSITE ELEVEE

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **10.05.2000 DE 10022798**

(43) Veröffentlichungstag der Anmeldung:
**19.02.2003 Patentblatt 2003/08**

(73) Patentinhaber: **Pfleiderer Infrastrukturtechnik GmbH & Co. KG**
**92318 Neumarkt (DE)**

(72) Erfinder: **GIANGRASSO, Antonio**
**90469 Nürnberg (DE)**

(74) Vertreter: **HOFFMANN - EITLE**
**Patent- und Rechtsanwälte**
**Arabellastrasse 4**
**81925 München (DE)**

(56) Entgegenhaltungen:
**US-A- 1 970 280**

## Beschreibung

Die Erfindung betrifft ein auf $SiO_2$ und $Na_2O$ und/oder $K_2O$ basierendes keramisches Material, ein Verfahren zu seiner Herstellung und seine Verwendung, insbesondere als Filtermaterial, Wasserspeicher und Adsorbens.

Es ist allgemein bekannt, dass sich poröse keramische Materialien u.a. für den Einsatz als Filtermaterialien eignen und als Adsorbentien verwendet werden können. In beiden Fällen werden dabei die Porosität und/oder die hohen Oberflächen der Materialien ausgenutzt.

So werden beispielsweise Sand und Kies als Filtermedien eingesetzt, wobei in diesem Fall nicht die einzelnen Körner selbst porös sind. Erst durch ihre Schüttung wird Porosität erzeugt, wodurch die Durchlässigkeit für Flüssigkeiten erreicht wird. Da eine solche Schüttung jedoch nur eine relativ kleine Oberfläche aufweist, muss für Filtrationszwecke sehr viel mehr Sand und Kies eingesetzt werden als im Fall von Materialien, bei denen die Körner selbst bereits porös sind.

Weiterhin ist der Einsatz von Aktivkohle als Filtermaterial allgemein bekannt. Aktivkohle besitzt eine hohe Oberfläche und zeigt daher gute Adsorptionseigenschaften. Als Folge der sehr kleinen Korngröße ist allerdings die Verstopfungsgefahr der Filter beim Einsatz von Aktivkohle recht hoch.

Weiterhin können poröse Kunststoffe, z.B. aus Polyethylen, als Filtermaterial eingesetzt werden. Jedoch sind diese Materialien nicht temperaturstabil und werden bei Wärmezufuhr (80°C und höher) weich.
Aufgrund ihrer Porosität und Temperaturstabilität eignen sich Tonmineralien ebenfalls als Filtermedien. Allerdings weisen diese den Nachteil auf, dass sich Tonteilchen während der Filtration lösen können, was zu unerwünschten Verunreinigungen des Filtrats führt.

Zum Stand der Technik gehören weiterhin Keramiken, die genutzt werden, um Wasser zu adsorbieren und zu speichern. Die Wasserspeicherung findet vor allem auf der Oberfläche der Körner statt, wobei die Oberflächenspannung des Wassers ausgenutzt wird. Die Wasserspeicherung ist jedoch lediglich bei Temperaturen bis Raumtemperatur effektiv, da bei hohen Temperaturen (40°C und höher) das auf der Oberfläche adsorbierte Wasser relativ schnell verdampfen würde.

Blähton stellt eine poröse Keramik dar, die ebenfalls für die Wasserspeicherung eingesetzt wird. Da die Materialien jedoch keine hohe Porosität aufweisen, ist auch ihr Wasseraufnahmevermögen in Bezug auf ihr Eigengewicht relativ gering.

Schließlich eignen sich poröse Keramiken nicht nur dazu, Wasser zu adsorbieren, sondern auch um größere Moleküle z.B. Bakterien aufzunehmen. Für die Aufnahme von großen Molekülen wie Bakterien ist eine Porengröße von wenigstens 0,1 µm erforderlich. Bisher werden für diesen Zweck Keramiken auf Basis von $Al_2O_3$ und $SiO_2$ eingesetzt, jedoch zeigen diese Materialien keine hohe Porosität, was die Anzahl an adsorbierten Bakterien limitiert.

Ein poröses gesintertes Granulat auf $SiO_2$-Basis mit Alkalisilikatbindung ist aus US-A-1970280 bekannt.

Die der Erfindung zugrundeliegende Aufgabenstellung besteht darin, ein keramisches Material bereitzustellen, das ein hohes Adsorptionsvermögen aufweist und sich daher hervorragend für die Verwendung als Filtermaterial, zur Adsorption und Speicherung von Wasser und zur Adsorption großer Moleküle wie Bakterien eignet.

Die obige Aufgabe wird gelöst durch ein keramisches Material, umfassend $SiO_2$ und $Na_2O$ und/oder $K_2O$, das eine Porosität größer 60% und Poren, von denen mehr als 70 % eine Porengröße im Bereich zwischen 0,1 und 15 µm besitzen, aufweist.

Das erfindungsgemäße keramische Material umfasst $SiO_2$ und $Na_2O$ und/oder $K_2O$. Aufgrund der Zusammensetzung aus anorganischen Oxiden ist es hitzebeständig und zersetzt sich auch bei hohen Temperaturen nicht.

Das erfindungsgemäße keramische Material besitzt eine Porosität von größer 60%. Die Porosität wird über das experimentell mittels Quecksilberporosimetrie bestimmte Porenvolumen und die Wahre Dichte (Feststoffdichte), die mit Hilfe eines Heliumpycnometers ermittelt wurde, nach folgender Formel berechnet:

$$P = V / (1/S + V) \cdot 100\%$$

wobei P für die Porosität, S für die Wahre Dichte und V für das Porenvolumen steht.

Das erfindungsgemäße Material ist weiterhin gekennzeichnet durch Poren, von denen wenigstens 70% in einem Größenbereich zwischen 0,1 und 15 µm liegen. Die Porengrößenverteilung wurde mit Hilfe der Quecksilberporosimetrie bestimmt.

Des weiteren kann das erfindungsgemäße keramische Material $Al_2O_3$ und auch weitere Oxide wie z.B. $Fe_2O_3$, MgO und CaO umfassen.

Vorzugsweise weisen mehr als 95% der Körner des erfindungsgemäßen keramischen Materials eine Korngröße zwischen 1 und 15 mm, insbesondere bevorzugt zwischen 5 und 12 mm auf. Die Korngröße wird dabei durch Ausmessen der Körner, z.B. mit einer Schublehre, bestimmt. Körner mit kleineren Korngrößen als 1 mm sind nicht bevorzugt, da diese bei ihrem Einsatz in der Filtration einen hohen Druckverlustanstieg erzeugen können. Die bevorzugte Obergrenze der Korngrößenverteilung ergibt sich daraus, dass sich mit größeren Körnern die Oberfläche im Vergleich zum Volumen des Materials verringert.

Ferner beträgt die Schüttdichte des keramischen Materials vorzugsweise zwischen 0,2 und 1,0 g/cm$^3$, insbesondere bevorzugt zwischen 0,3 und 0,5 g/cm$^3$. Die Bestimmung der Schüttdichte erfolgt durch Einfüllen des erfindungsgemäßen keramischen Materials in ein Gefäß mit einem Volumen von 1 Liter. Anschließend wird das mit der Keramik auf 1 Liter gefüllte Gefäß gewogen, wodurch die Gewichtsmenge der Keramik pro Liter ermittelt wird.

Das keramische Material weist weiterhin vorteilhafterweise eine Schüttoberfläche zwischen 350 und 1500 m$^2$/l auf. Mit Schüttoberfläche ist die Oberfläche gemeint, die sich aus dem Produkt der Oberfläche des keramischen Materials selbst und der Dichte der Schüttung des keramischen Materials ergibt. Die Oberfläche des erfindungsgemäßen keramischen Materials wird dabei mittels Stickstoffporosimetrie und Auswertung der Adsorptionsisotherme nach der BET-Methode bestimmt.

Das erfindungsgemäße keramische Material wird über ein Verfahren hergestellt, das die folgenden Schritte umfasst:

(a) Pelletieren einer Mischung, umfassend
1,0 Gew.-Teile eines keramischen Rohstoffes, der mehr als 40 Gew.% SiO$_2$ und 0,5 - 10 Gew.% Na$_2$O + K$_2$O umfasst, und
0,5 - 1,5 Gew.-Teile wässriges Bindemittel,
umfassend Wasser und Wasserglas mit einem Gewichtsverhältnis Wasser : Wasserglas von 95 : 5 - 55 : 45
(b) Trocknen und Sintern der in Schritt (a) erhaltenen Körner.

Das erfindungsgemäße Herstellungsverfahren wird im folgenden in Bezug auf einzelne Herstellungsschritte näher beschrieben.

Im Schritt (a) wird ein keramischer Rohstoff, der mehr als 40 Gew.% SiO$_2$ und 0,5 - 10 Gew.% Na$_2$O + K$_2$O umfasst, eingesetzt. In einer bevorzugten Ausführungsform umfasst der keramische Rohstoff 60 - 90 Gew.% SiO$_2$. Des weiteren kann der keramische Rohstoff Al$_2$O$_3$ und weitere Oxide wie z.B. Fe$_2$O$_3$, MgO und CaO beinhalten. Weiterhin umfasst in einer bevorzugten Ausführungsform der keramische Rohstoff eine Kieselgur. In einer besonders bevorzugten Ausführungsform ist der keramische Rohstoff eine Kieselgur, die 70 - 90 Gew.% SiO$_2$, 0,5 - 4 Gew.% Na$_2$O+K$_2$O und 4 - 10 Gew.% Al$_2$O$_3$ umfasst.

Als weitere Komponente der Mischung aus Schritt (a) wird ein wässriges Bindemittel, umfassend Wasser und Wasserglas, mit einem Gewichtsverhältnis Wasser : Wasserglas von 95 : 5 - 55 : 45, bevorzugt 75 : 25, eingesetzt. Dabei kann das Wasserglas Natriumwasserglas und/oder Kaliumwasserglas und/oder Calciumwasserglas umfassen. In einer besonders bevorzugten Ausführungsform umfasst das Wasserglas 8 - 10 Gew.% Na$_2$O, 26 - 32 Gew.% SiO$_2$, Rest Wasser.

Die Mischung, die pelletiert wird, umfasst 1,0 Gew.-Teile des keramischen Rohstoffes und 0,5 - 1,5 Gew.-Teile des wässrigen Bindemittels. In einer bevorzugten Ausführungsform wird das Verhältnis keramischer Rohstoff zu wässrigem Bindemittel von 1 : 0,8-1,2 und besonders bevorzugt von 1 : 0,9-1,1 eingesetzt.

Die Mischung aus wässrigem Bindemittel und keramischem Rohstoff wird auf einem Pelletierteller pelletiert, wodurch Körner erhalten werden, von denen vorzugsweise mehr als 95% eine Größe zwischen 1 und 15 mm, insbesondere bevorzugt zwischen 5 und 12 mm aufweisen. Die Eigenschaften der Körner können insbesondere durch die Winkelstellung des Pelletiertellers, sein Randhöhenverhältnis und seine Drehgeschwindigkeit beeinflusst werden.

Die in Schritt (a) hergestellten Körner werden in Schritt (b) getrocknet und gesintert. In einer bevorzugten Ausführungsform werden die Körner zunächst durch kontinuierliches Aufheizen von Raumtemperatur auf 650 °C getrocknet und anschließend bei 650 °C (Anfangstemperatur) bis 1000°C-1200°C (Endtemperatur) gesintert. Anschließend können die Körner in einem Schritt c) nach einer Größe von 1 bis 15 mm klassiert werden. Die Klassierung erfolgt durch mechanisches Sieben unter Verwendung z.B. eines Linearschwingsiebs oder Taumelsiebs.

Das erfindungsgemäße keramische Material eignet sich aufgrund seiner großen Porosität für die Filtration von Flüssigkeiten, insbesondere Wasser.

Außerdem kann die große Porosität des keramischen Materials für die Speicherung von Wasser ausgenutzt werden. Das erfindungsgemäße keramische Material zeigt dabei ein Wasseraufnahmevermögen von > 70% seines Eigengewichts. Aufgrund der Eigenschaft, Wasser in hohem Maße zu speichern, können die erfindungsgemäßen keramischen Materialien beispielsweise zur Bewässerung von Pflanzen in heißen und trockenen Gebieten eingesetzt werden. Das gespeicherte Wasser wird nur sehr langsam an die Umgebung abgegeben, wodurch das Vertrocknen der Pflanze vermieden werden kann. Darüber hinaus können auch andere hydrophile Flüssigkeiten, wie Alkohole, von dem erfindungsgemäßen keramischen Material aufgenommen werden.

Die erfindungsgemäßen keramischen Materialien können weiterhin für die Adsorption von großen Molekülen wie Bakterien genutzt werden. Außerdem ist die Aufnahme von ähnlich großen Molekülen, wie beispielsweise Polymere mit entsprechenden Molekulargewichten, denkbar.

Im folgenden wird die Erfindung anhand zweier Beispiele näher erläutert.

Beispiel 1

Zur Herstellung der Pelletierflüssigkeit werden NatronWasserglas mit einer Zusammensetzung von 8,2 Gew.% $Na_2O$, 27,3 Gew.% $SiO_2$ und 64,5 Gew. % $H_2O$ in Wasser mit einem Gewichtsverhältnis Wasser : Wasserglas von 75 : 25 gelöst. Die so hergestellte Pelletierflüssigkeit wird mit einer Zulaufleistung von 20 l/h auf einem Pelletierteller mit einer Kieselgur, umfassend 84 Gew.% $SiO_2$, 5,8 Gew.% $Al_2O_3$, 2,7 Gew.% $Fe_2O_3$, 1,4 Gew.% MgO+CaO und 0,7 Gew.% $Na_2O+K_2O$, die mit einer Zulaufleistung von 20 kg/h auf den Pelletierteller gegeben wird, gemischt. Die Pelletierung wird auf einem Pelletierteller mit einem Randhöhenverhältnis von H/D = 0,28 durchgeführt. Während der Pelletierung beträgt die Tellerneigung 50° ± 5° und die Drehzahl 6-7 U/min. Dadurch werden Körner erhalten, von denen mehr als 95% eine Größe zwischen 6 und 12 mm aufweisen. Die so hergestellten Körner werden mit einer Geschwindigkeit von 1 m/min durch einen Drehrohrofen mit einer Länge von 12 m, davon 6 m Heizzone und 6 m Kühlzone, geleitet. Dadurch werden die Proben durch kontinuierliches Aufheizen in einem Temperaturbereich von Raumtemperatur bis 650 °C getrocknet, anschließend in einem Temperaturbereich von 650 bis 1100°C gesintert und abschließend auf Raumtemperatur abgekühlt.
Die physikalischen Daten der erhaltenen Keramik sind in Tabelle 1 zusammengefasst.

Beispiel 2

Zur Herstellung der Pelletierflüssigkeit werden NatronWasserglas mit einer Zusammensetzung von 8,2 Gew.% $Na_2O$, 27,3 Gew.% $SiO_2$ und 64,5 Gew.% $H_2O$ in Wasser mit einem Gewichtsverhältnis von Wasser : Wasserglas von 95 : 5 gelöst. Die so hergestellte Pelletierflüssigkeit wird mit einer Zulaufleistung von 20 l/h auf einen Pelletierteller mit Kieselgur, umfassend 75 Gew.% $SiO_2$, 9,0 Gew.% $Al_2O_3$, 6,0 Gew.% $Fe_2O_3$, 2,5 Gew.% CaO, 1,0 Gew.% MgO und 2,5 Gew.% $Na_2O+K_2O$, die mit einer Zulaufleistung von 25 kg/h auf den Pelletierteller gegeben wird, gemischt. Die Pelletierung wird auf einem Pelletierteller mit einem Randhöhenverhältnis von H/D = 0,28 durchgeführt. Die Tellerneigung während der Pelletierung beträgt 60° ± 5° und die Drehzahl 6-7 U/min. Dadurch werden Körner erhalten, von denen mehr als 95% eine Größe zwischen 1 und 15 mm aufweisen. Die so hergestellten Körner werden mit einer Geschwindigkeit von 1 m/min durch einen Drehrohrofen mit einer Länge von 12 m, davon 6 m Heizzone und 6 m Kühlzone, geleitet. Dadurch werden die Proben durch kontinuierliches Aufheizen in einem Temperaturbereich von Raumtemperatur bis 650 °C getrocknet, anschließend in einem Temperaturbereich von 650 bis 1100 °C gesintert und abschließend auf Raumtemperatur abgekühlt.
Die physikalischen Daten der erhaltenen Keramik sind in Tabelle 1 zusammengefasst.

Tabelle 1

| Eigenschaft | Beispiel 1 | Beispiel 2 |
|---|---|---|
| Porosität [%] | 62,7 | 63,7 |
| Anteil der Poren mit einer Porengröße im Bereich zwischen 0,1 und 15 µm [%] | 74 | 94 |
| Porenvolumen [$cm^3$/g] | 0,73 | 0,72 |
| BET-Oberfläche [$m^2$/g] | 0,9 | 3,5 |
| Schüttdichte [g/$cm^3$] | 0,42 | 0,42 |
| Schüttoberfläche [$m^2$/l] | 378 | 1470 |

**Patentansprüche**

1. Keramisches Material in gekörnter Form, umfassend $SiO_2$ und $Na_2O$ und/oder $K_2O$, **gekennzeichnet durch** eine Porosität größer als 60% und Poren, von denen mehr als 70 % eine Porengröße zwischen 0,1 und 15 µm aufweisen.

2. Keramisches Material gemäß Anspruch 1, **dadurch gekennzeichnet, dass** es zusätzlich $Al_2O_3$ enthält.

3. Keramisches Material gemäß Anspruch 1 oder 2, **dadurch gekennzeichnet, dass** mehr als 95% seiner Körner eine Korngröße zwischen 1 und 15 mm aufweisen.

4. Keramisches Material gemäß einem oder mehreren der vorhergehenden Ansprüche 1 bis 3, **dadurch gekenn-**

**zeichnet, dass** seine Schüttung eine Schüttdichte zwischen 0,2 und 1,0 g/cm$^3$ aufweist.

**5.** Keramisches Material gemäß einem oder mehreren der vorhergehenden Ansprüche 1 bis 4, **dadurch gekennzeichnet, dass** seine Schüttung eine Schüttoberfläche zwischen 350 und 1500 m$^2$/l aufweist.

**6.** Verfahren zur Herstellung des keramischen Materials gemäss einem oder mehreren der Ansprüche 1 bis 5, **gekennzeichnet durch** die folgenden Herstellungsschritte:

(a) Pelletieren einer Mischung, umfassend
1,0 Gew.-Teile eines keramischen Rohstoffes, der mehr als 40 Gew.% SiO$_2$ und 0,5-10 Gew.% Na$_2$O+K$_2$O umfasst, und
0,5 - 1,5 Gew.-Teile wässriges Bindemittel, umfassend Wasser und Wasserglas mit einem Gewichtsverhältnis Wasser : Wasserglas von 95:5 - 55:45
(b) Trocknen und Sintern der in Schritt (a) erhaltenen Körner.

**7.** Verfahren zur Herstellung des keramischen Materials gemäß Anspruch 6, **dadurch gekennzeichnet, dass** der keramische Rohstoff 1 - 10 Gew.% Al$_2$O$_3$ aufweist.

**8.** Verfahren zur Herstellung des keramischen Materials gemäß Anspruch 7, **dadurch gekennzeichnet, dass** der keramische Rohstoff eine Kieselgur umfasst.

**9.** Verfahren zur Herstellung des keramischen Materials gemäß Anspruch 8, **dadurch gekennzeichnet, dass** die Kieselgur 70 - 90 Gew.% SiO$_2$, 0,5 - 4 Gew.% K$_2$O+Na$_2$O und 4 - 10 Gew.% Al$_2$O$_3$ umfasst.

**10.** Verfahren zur Herstellung des keramischen Materials gemäß einem oder mehreren der vorhergehenden Ansprüche 6 bis 9, **dadurch gekennzeichnet, dass** das Wasserglas 8 - 10 Gew.% Na$_2$O, 26 - 32 Gew.% SiO$_2$ und Rest Wasser umfasst.

**11.** Verfahren zur Herstellung des keramischen Materials gemäß einem oder mehreren der vorhergehenden Ansprüche 6 bis 10, **dadurch gekennzeichnet, dass** das Verhältnis keramischer Rohstoff zu wässrigem Bindemittel 1 : 0,8-1,2 ist.

**12.** Verfahren zur Herstellung des keramischen Materials gemäss einem oder mehreren der vorhergehenden Ansprüche 6 bis 11, **dadurch gekennzeichnet, dass** Schritt b) ein Trocknen im Temperaturbereich zwischen Raumtemperatur und 650 °C und anschließendes Sintern bei 650 °C (Anfangstemperatur) bis 1000-1200 °C (Endtemperatur) beinhaltet.

**13.** Verfahren zur Herstellung des keramischen Materials gemäss einem oder mehreren der vorhergehenden Ansprüche 6 bis 12, **dadurch gekennzeichnet, dass** in einem Schritt c) die gesinterten Körner nach einer Korngröße von 1 - 15 mm klassiert werden.

**14.** Verwendung des keramischen Materials gemäss einem oder mehreren der Ansprüche 1 bis 5 für die Filtration von Wasser.

**15.** Verwendung des keramischen Materials gemäss einem oder mehreren der Ansprüche 1 bis 5 für die Speicherung von Wasser.

**16.** Verwendung des keramischen Materials gemäss einem oder mehreren der Ansprüche 1 bis 5 für die Adsorption von Bakterien.

**Claims**

**1.** Ceramic material in granular form comprising SiO$_2$ and Na$_2$O and/or K$_2$O, **characterised by** a porosity greater than 60% and pores, of which more than 70% have a pore size between 0.1 and 15 µm.

**2.** Ceramic material according to claim 1, **characterised in that** it additionally contains Al$_2$O$_3$.

3. Ceramic material according to claim 1 or 2, **characterised in that** more than 95% of its grains have a grain size between 1 and 15 mm.

4. Ceramic material according to one or more of the preceding claims 1 to 3, **characterised in that** its stock has a bulk density between 0.2 and 1.0 $g/cm^3$.

5. Ceramic material according to one or more of the preceding claims 1 to 4, **characterised in that** its stock has a bulk surface area between 350 and 1,500 $m^2/l$.

6. Process for producing ceramic material according to one or more of claims 1 to 5, **characterised by** the following production steps:

(a) pelleting a mixture comprising 1.0 parts by weight of a ceramic raw material, which comprises more than 40 wt.% of $SiO_2$ and 0.5-10 wt.% of $Na_2O+K_2O$, and 0.5 - 1.5 parts by weight of aqueous binder, comprising water and water glass having a weight ratio water:water glass of 95:5 - 55:45
(b) drying and sintering the grains obtained in step (a).

7. Process for producing ceramic material according to claim 6, **characterised in that** the ceramic raw material has 1-10 wt.% of $Al_2O_3$.

8. Process for producing ceramic material according to claim 7, **characterised in that** the ceramic raw material comprises a diatomaceous earth.

9. Process for producing ceramic material according to claim 8, **characterised in that** the diatomaceous earth comprises 70-90 wt.% of $SiO_2$, 0.5-4 wt.% of $K_2O+Na_2O$ and 4-10 wt.% of $Al_2O_3$.

10. Process for producing ceramic material according to one or more of the preceding claims 6 to 9, **characterised in that** the water glass comprises 8-10 wt.% of $Na_2O$, 26-32 wt.% of $SiO_2$ and the remainder water.

11. Process for producing ceramic material according to one or more of the preceding claims 6 to 10, **characterised in that** the ratio of ceramic raw material to aqueous binder is 1:0.8-1.2.

12. Process for producing ceramic material according to one or more of the preceding claims 6 to 11, **characterised in that** step b) includes drying in the temperature range between room temperature and 650°C and subsequent sintering at 650°C (initial temperature) up to 1,000-1,200°C (final temperature).

13. Process for producing ceramic material according to one or more of the preceding claims 6 to 12, **characterised in that** in a step c) the sintered grains are classified according to a grain size of 1-15 mm.

14. Use of ceramic material according to one or more of claims 1 to 5 for the filtration of water.

15. Use of ceramic material according to one or more of claims 1 to 5 for the storage of water.

16. Use of ceramic material according to one or more of claims 1 to 5 for the adsorption of bacteria.

**Revendications**

1. Matériau céramique se présentant sous forme granulaire, comprenant du $SiO_2$ et du $Na_2O$ et/ou $K_2O$, **caractérisé par** une porosité supérieure à 60 % et des pores dont plus de 70 % présentent une taille de pore comprise entre 0,1 et 15 μm.

2. Matériau céramique selon .la revendication 1, **caractérisé en ce qu'**il contient en plus du $Al_2O_3$.

3. Matériau céramique selon la revendication 1 ou 2, **caractérisé en ce que** plus de 95 % de ses grains présentent une taille de grain comprise entre 1 et 15 μm.

4. Matériau céramique selon l'une ou plusieurs des revendications 1 à 3 précédentes, **caractérisé en ce que** sa masse en vrac présente une masse volumique comprise entre 0,2 et 1,0 g/cm$^3$.

**5.** Matériau céramique selon l'une ou plusieurs des revendications 1 à 4 précédentes, **caractérisé en ce que** sa masse en vrac présente une surface de masse en vrac comprise entre 350 et 1500 m$^2$/l.

**6.** Procédé de fabrication du matériau céramique selon l'une ou plusieurs des revendications 1 à 5, **caractérisé par** les étapes de procédé suivantes :

(a) façonnage en boulettes d'un mélange comprenant 1,0 partie en poids d'une matière brute céramique, comprenant plus de 40 % en poids de $SiO_2$ et de 0,5 à 10 % en poids de $Na_2O+K_2O$, et
0,5 à 1,5 partie en poids de liant aqueux, comprenant de l'eau et du verre soluble avec un rapport de poids eau : verre soluble de 95:5 à 55:45
(b) séchage et frittage des gaz obtenus à l'étape (a).

**7.** Procédé de fabrication du matériau céramique selon la revendication 6, **caractérisé en ce que** la matière brute céramique présente de 1 à 10 % en poids d'$Al_2O_3$.

**8.** Procédé de fabrication du matériau céramique selon la revendication 7, **caractérisé en ce que** la matière brute céramique comprend une diatomite.

**9.** Procédé de fabrication du matériau céramique selon la revendication 8, **caractérisé en ce que** la diatomite comprend de 70 à 90 % en poids de $SiO_2$, de 0,5 à 4 % en poids de $K_2O+Na_2O$ et de 4 à 10 % en poids d'$Al_2O_3$.

**10.** Procédé de fabrication du matériau céramique selon l'une ou plusieurs des revendications 6 à 9 précédentes, **caractérisé en ce que** le verre soluble comprend de 8 à 10 % en poids de $Na_2O$, de 26 à 32 % en poids de $SiO_2$, et le reste étant de l'eau.

**11.** Procédé de fabrication du matériau céramique selon l'une ou plusieurs des revendications 6 à 10 précédentes, **caractérisé en ce que** le rapport, entre la matière brute céramique et le liant aqueux, est de 1:0,8 à 1,2.

**12.** Procédé de fabrication du matériau céramique selon l'une ou plusieurs des revendications 6 à 11 précédentes, **caractérisé en ce que** l'étape (b) contient un séchage, pratiqué dans la plage de température comprise entre la température ambiante et 650°C et suivi d'un frittage pratiqué à 650°C (température initiale) jusqu'à 1000 à 1200°C (température finale).

**13.** Procédé de fabrication du matériau céramique selon l'une ou plusieurs des revendications 6 à 12 précédentes, **caractérisé en ce que**, en une étape (c) les grains frittés sont triés selon une taille de grains de 1 à 15 mm.

**14.** Utilisation du matériau céramique selon l'une ou plusieurs des revendications 1 à 5, pour la filtration d'eau.

**15.** Utilisation du matériau céramique selon l'une ou plusieurs des revendications 1 à 5, pour le stockage d'eau.

**16.** Utilisation du matériau céramique selon l'une ou plusieurs des revendications 1 à 5, pour l'absorption de bactéries.